# EUROPEAN PATENT SPECIFICATION

(11) **EP 3 495 071 B1**
(45) Date of publication and mention of the grant of the patent: **28.07.2021**
(21) Application number: 17205891.9
(22) Date of filing: 07.12.2017
(51) Int. Cl.: B21J 15/02, B21J 15/14, B21J 15/36, B29C 65/56, B29C 65/00, F16B 19/08

(54) **SYSTEM AND METHOD FOR JOINING A FIRST AND A SECOND COMPONENT**
SYSTEM UND VERFAHREN ZUM VERBINDEN EINER ERSTEN UND EINER ZWEITEN KOMPONENTE
SYSTÈME ET PROCÉDÉ D'ASSEMBLAGE D'UN PREMIER ET D'UN SECOND COMPOSANT

(43) Date of publication of application: 12.06.2019
(73) Proprietor: Newfrey LLC, New Britain, CT 06053 (US)
(72) Inventor: MÖSER, Joachim, 35394 Giessen (DE); TRIPP, Andreas, 35394 Giessen (DE)
(74) Representative: SBD IPAdmin

(56) References cited:
- CN-A- 105 057 546
- IT-B- 1 243 844
- US-A- 3 132 766
- US-A- 4 101 064
- US-A1- 2009 007 738

## Description

The present invention relates to a system comprising an apparatus for joining at least one first component and one second component and a washer; and to a method for joining said first and second components. The present invention is more particularly directed to a system and a method adapted to be implemented in joining methods such as self-piercing riveting, commonly used, for example, in the automotive industry.

A major goal of the automotive manufacturers is to reduce the weight of passenger cars. The structural body of a vehicle is a vehicle's largest structure, and therefore ideal for weight reduction considerations to respond to environmental concerns. The implementation of assembly processes and/or materials minimizing the body weight of the vehicle is a key characteristic to achieve a reduced weight, without sacrificing vehicle dynamics, durability and crash worthiness.

More particularly, following an increasing need for high strength and weight reduction of a vehicle body, a steel sheet such as ultra-high tensile steel, a nonferrous metal plate such as aluminum or magnesium, and a plate made of a plastic material such as carbon fiber reinforced plastic (CFRP) or glass fiber reinforced plastic (GFRP) have been frequently used as a material of the vehicle body. The thickness of such sheets is also frequently changed.

It may be difficult to assemble such sheets together with conventional joining methods. A dissimilar material plastic composite plate and a metal plate may be joined by a very limitative joining mode, such as a bonding mode using an adhesive or a mechanical joining mode using engagement parts. Plate having low thicknesses are also difficult to assemble together with conventional joining methods.

The use of a mechanical joining mode such like self-piercing rivet is particularly interesting and commonly used in the automotive industry. However, this technology is limited by various factors such as the thickness of the sheets, the direction of the rivet and the ductility of the sheet facing the die used in the self-riveting process.

There is therefore a constant need to improve conventional joining methods like rivet joining technology using a self-piercing rivet.

Document US2017074310 discloses a joining structure in which two or more dissimilar materials or part are joined together, such that damages to a periphery of a self-piercing rivet pierced portion of a plastic plate or a plastic composite plate can be minimized. The joining structure comprises a self-healing capsule containing a self-healing agent in a base material of a plastic resin and a catalyst being polymerized with the self-healing agent. The self-healing capsule is provided in the plastic plate and the self-healing agent is adapted to flow out of the self-healing capsule in order to fill a gap of the crack and causes polymerization with the catalyst to cure the crack portion.

Such joining structure implies the use of very particular materials and is difficult to implement.

Document US2013000101 is also directed to a connection between two components, at least one of them comprising a reinforced plastic, and a self-piercing connection element passing through the two components and a disc-shaped counter bearing, wherein the shaft of the rivet is fastened to the disc-shaped counter bearing so that first and second components are fastened between the head of the rivet and the counter bearing.

The use of a disc-shaped counter bearing (also called washer) allows the connection of components having a strength of more than 300MPa. For producing the connection, the self-piercing connection element, with head and shaft, is inserted into the first and second component. In order to reliably connect the two components together, the shaft of the connection element, which completely penetrates through the components to be connected, is anchored to the disc-shaped counter bearing. The disc-shaped counter bearing or washer is thus used as an auxiliary joining part.

Due to this construction, the components arranged between the head of the connection element and the disc-shaped counter bearing are held in a force-locking and form-locking manner. The disc-shaped counter bearing also ensures that the tensile stresses acting in the axial direction of the shaft are distributed over the surface of the counter bearing, and are then introduced into the adjacent second component. This reduces stress concentrations adjacent to the shaft of the connection element.

However, the use of such disc-shaped counter-bearing implies a complicated implementation, with the need to provide for each connection the washer (or disc-shaped counter bearing) and to maintain the washer in position during the joining process in order to avoid any defect connection and to provide a method which can be easily repeated.

Document US4101064, on which the preamble of claim 1 is based, discloses a riveting device with a support, a die and a sleeve which telescopes over the die and the support; and a method of setting a slug rivet.

Document US2015125201 relates to a method for joining an upper sheet metal part and of a lower sheet metal part of which at least one is formed as an organic sheet metal part. The method is carried out by means of an auxiliary joining part and at least one metal washer with an aperture, with the auxiliary joining part having a functional section with an undercut at one end and at the other end, a piercing section with a lateral shaft surface and a shaft recess formed therein. A piercing tool is used to implement the method. The piercing tool comprises a setting head and a die button between which two sheet metal parts are arranged which are to be connected to one another. The die button has at its upper side a trough-like mount with a narrow die projection and a central passage which is bordered by the die projection. The joining of the two sheet metal parts takes place with the aid of two metal washers and one of them is located in a mount of the die button and is held in contact by the die button. The die button has a two-part housing and a plurality of functional parts to ensure a correct joining process.

The die button adapted to receive the washer is difficult to implement and requires the arrangement of several different parts. Besides, such apparatus may be easily damaged. The washer received in the die button can easily move during the joining process. Finally the arrangement disclosed in US2015125201 may be easily damaged and may require a constant replacement or change of the apparatus.

It is hence an object of the present invention to at least alleviate the aforementioned shortcomings.

More particularly, it is an object of the disclosure to provide a system, wherein the apparatus is adapted to receive the washer which allows a correct positioning of the washer before and during the joining step. It is further an object of the present invention to provide a system and a method for joining at least one first component and one second component which may be easily implemented, robust and with a flexible use.

Accordingly the present invention provides a system with an apparatus for joining at least one first component and one second component comprising:
- a die with a die shank and a die head, wherein the die head comprises a first surface and a second surface,
- a supporting body comprising an aperture in which the die shank extends and a receiving surface supporting the first surface of the die head,
wherein the apparatus further comprises a sleeve extending between a first end and a second end, the sleeve being arranged around a portion of the supporting body and around the die head, wherein the sleeve extends beyond the die head such that a recess between the second end of the sleeve and the second surface of the die head, the recess being adapted to receive a washer, and with a washer having a washer diameter, a first surface and a second surface opposite the first surface, wherein the washer extends in the recess provided between the second end of the sleeve and the second surface of the die head, and wherein the washer diameter is equal to or superior to a diameter of the die head.

The sleeve and the recess allow the reception of a washer which may be used to increase the joining properties of joining processes such as self-piercing riveting. The presence of the washer enables to increase the range of the components which may be used. More particularly, components with different thickness and/or ductility can be joined due to the presence of the washer. Such apparatus can be used with or without a washer, due to the presence of the sleeve. Thus, the use of the washer is very flexible. The present invention allows the washer to be securely held in the apparatus and thus to be easily used in a joining process in an industrial environment, such as a car assembly line.

According to an embodiment the apparatus further comprises a spring arranged around the supporting body and cooperating with the first end of the sleeve, such that the sleeve is adapted to move longitudinally along the supporting body. Thus, during a joining step, the sleeve is elastically pushed if no washer is provided or if the washer in the recess has a thin thickness, which leads to less damages and maintenance requirements.

According to an embodiment the second end of the sleeve is at least partly tapered. The tapered portion may allow a correct centering of the washer and/or may be used to retain the washer in the recess.

According to an embodiment the sleeve comprises at least one elastic tongue partly defining the second end. The elastic tongue is used for a better centering of the washer and to improve the joining process.

According to an embodiment the supporting body comprises a locking opening adapted to secure the die shank in the aperture, and wherein the locking opening is accessible through the sleeve

According to an embodiment the supporting body comprises a locking opening adapted to secure the die shank in the aperture, and wherein the locking opening is accessible through the sleeve. Thus the sleeve does not limit access to the die and/or limit the locking of the die in the supporting body.

According to an embodiment the supporting body is made in a first steel material. According to an embodiment, the sleeve is made is a second steel material, and the first and second steel materials are different. The second steel material may be a spring steel, whereas the first steel material is a high strength steel.

According to an embodiment the second steel material has a higher yield strength than the first steel material. Thus a correct joining can be realized with limited risks of damages.

According to an embodiment the supporting body and/or the sleeve comprises a centering element adapted to center a feeding track for feeding the washer in the recess. Thus an automatic feeding of the washer in the recess can be implemented.

According to an embodiment the centering element comprises two cavities adapted to cooperate with a fork of a feeding track. A feeding track can thus be securely attached to the sleeve and/or the supporting body.

According to an embodiment the second end of the sleeve comprises a plurality of projection adapted to center a washer. The projection may or may not correspond to a free end of the elastic tongues above-mentioned.

According to an embodiment, the second end of the sleeve comprises a slot adapted for the transfer of a washer from a feeding track to the recess. Thus an automatic feeding of the washer in the recess can easily be implemented.

According to an embodiment, the washer protrudes from the second end of the sleeve. Thus during the joining step of the first and second components, none of the components is in contact with the sleeve and/or the die and/or the supporting body.

According to an embodiment, the washer has a circular shape and a washer thickness, wherein the first surface of the washer is adapted to be connected to the die head by a friction connection and/or a form fit connection.

According to an embodiment, the first surface of the washer comprises a surface roughness such that a friction connection between the washer and the die head can be performed.

Finally the present invention relates to a method for joining at least one first component and one second component by a self-piercing rivet comprising the steps:
- providing an apparatus as previously described,
- providing a washer and inserting the washer in the recess of the apparatus,
- arranging a first and a second component over one another and against the washer,
- providing and setting a self-piercing rivet such that a shaft of the self-piercing rivet penetrates the first component, the second component and the washer, wherein the washer acts as a die.

Other characteristics and advantages of the invention will readily appear from the following description of embodiments, provided as non-limitative examples, in reference to the accompanying drawings.

In the drawings:
- Fig. 1 shows a schematic representation of a portion of a C-frame provided in a joining tool used for the joining of at least two components with an apparatus comprising a die, a sleeve and a supporting body;
- Fig. 2 shows a schematic view of the apparatus of Fig. 1 with the die, the sleeve, the supporting body, and a washer partly arranged between the die and the sleeve;
- Fig. 3 is a view of an apparatus of the system according to the invention;
- Fig. 4 is a view of a washer adapted to be used in the apparatus of Fig. 1 or 2;
- Fig. 5A to Fig. 5L are different embodiments of a washer which may be used with the apparatus of Fig. 2 or Fig. 3.

On the different figures, the same reference signs designate identical or similar elements.

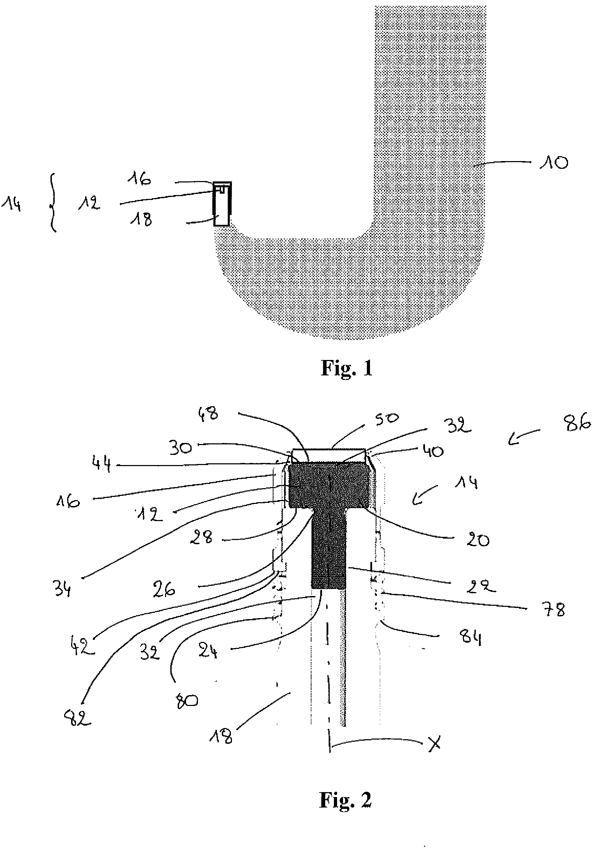

Fig. 1 is a schematic representation of a portion of a C-frame 10 of a piercing tool, for example a self-piercing rivet setting tool. Commonly, a self-piercing rivet setting tool comprises a C-shaped frame 10 mounted on a front end of an arm of an articulated robot, a die 12 mounted to one end (for example a lower end as illustrated in Fig. 1) of the C-shaped frame 10; a punch (not represented) mounted to the other end (upper end) of the C-shaped frame, the punch being arranged opposed to the die 12 so as to be capable of moving into contact with/away from the die 12. The C-shaped frame 10 is advantageously formed so as to pinch panels or components to be joined or riveted at a riveting site.

As illustrated in Fig. 1, the die 12 is provided in an apparatus 14. The apparatus 14 thus comprises the die 12, a sleeve 16 and a supporting body 18.

The die 12 comprises a die head 20 which is preferably circular in cross section, as well as a die shank 22 which is also circular in cross section. The die shank 22 extends along a longitudinal axis X between a first shank end 24 and a second shank end 26. The die head 20 extends from the second shank end 26. The diameter of the die shank 22 is preferably smaller than that of the die head 20. The die head 20 comprises a first surface 28 and a second surface 30, opposite the first surface. The first surface 28 of the die head faces the die shank. The second surface 30 may comprise a recess 32.

The die 12 is adapted to be received in the supporting body 18. More particularly, the die shank 22 is adapted to be received in an aperture 32 provided in the supporting body 18. The supporting body 18 further comprises a receiving surface 34. The receiving surface 34 is adapted to support the first surface 28 of the die head 20.

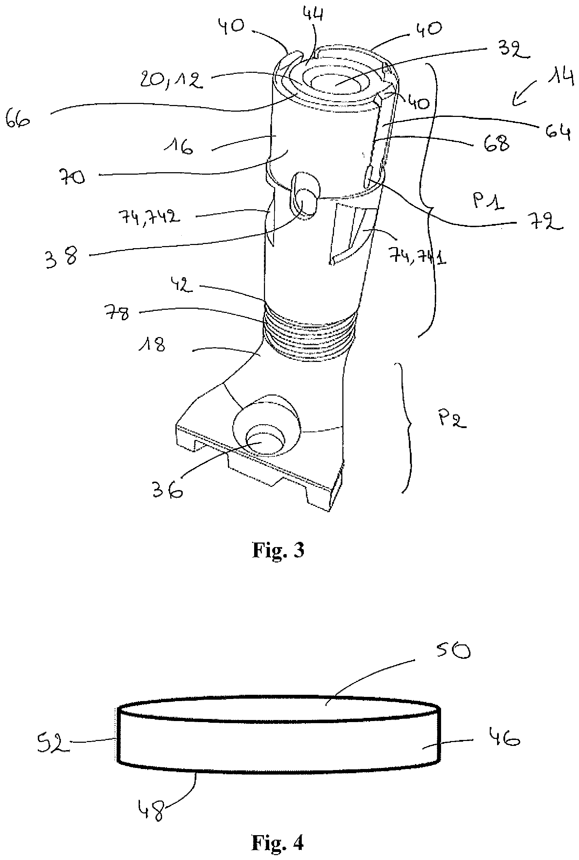

The supporting body 18 may be a portion of the C-shaped frame or may be a separate part fixed to the C-shaped frame. As represented in Fig. 3, the supporting body 18 comprises a first portion P1 extending longitudinally along the longitudinal axis X, and a second portion P2 extending laterally from the first portion P1, notably at a first free end of the first portion P1. A securing hole 36 is provided in the second portion P2 to secure the supporting body 18 to the C-shaped frame 10. The aperture 32 and the receiving surface 34 are provided in the first portion P1. For instance the receiving surface 34 is opposite the second portion P2. More particularly, the receiving surface 43 is arranged opposite the first free end.

The supporting body 18 may be provided with a locking member 38, and more particularly with a locking opening 38 which allows to secure the die 12 in the aperture 32 of the supporting body 18. Thus the die 12 is maintained in position in the securing body 18 and cannot moves in rotation or translation with regard to the supporting body before, during or after a setting step of a fastener. The locking opening 38 can have a circular or oblong section. The locking opening 38 is adapted to receive a screw or any similar locking element adapted to secure the position of the die.

The supporting body 18 and the die 12 arranged in the aperture are capped by the sleeve 16. The sleeve 16 is, as schematically illustrated in Fig. 2, a hollow cylindrical body. The sleeve 16 extends partly around the supporting body 18, and more particularly around the first portion P1 of the supporting body and around the die head 20. The sleeve 16 longitudinally extends over the entire length of the die head 20 along the longitudinal axis X, such that a free end 40 of the sleeve 16 protrudes from the plan formed by the second surface of the die head. The sleeve 16 allows access to the second surface 30 of the die head.

The sleeve 16 longitudinally extends between a first end 42 and a second end 40, which corresponds to the free end 40 protruding from the plan formed by the second surface of the die head. The second end 40 is arranged above the second surface of the die head 20, such that a recess 44 is provided. The recess 44 is thus defined by the second surface 30 of the die head 20 and the second end 40 of the sleeve 16.

The recess 44 is adapted to receive a washer 46, as illustrated in Fig. 2. The washer 46 is more particularly depicted in Fig. 4. The washer 46 may be a metal washer. The washer 46 may be made in a ductile metal, such as aluminum, steel, stainless steel or titanium. The washer is for example cut from a panel with a water jet cutting. However, in other embodiments, other manufacturing or cutting methods may be used.

The washer 46 has a circular shape, which corresponds to the shape of the recess 44. More particularly, the washer is a disc-shaped washer 46 and form a counter bearing.

The washer 46 has a thickness which is sensibly greater than the distance between the second surface 30 of the die head and the second end 40 of the sleeve, such that a portion of the washer protrudes from the sleeve when the washer is inserted in the recess 44.

The diameter of the washer 46 sensibly corresponds to the inner diameter of the sleeve 16, as illustrated in Fig. 2. The washer 46 is maintained in the recess 44 by friction. However, in other embodiments, the washer may have a particular shape and may be maintained in the recess 44 by other means such as form fil connection, as described below.

The washer 46 has a first washer surface 48 adapted to contact the second surface 30 of the die head and a second washer surface 50 opposite the first washer surface. The first washer surface 48 and the second washer surface 50 are joined together by a lateral wall 52. The lateral wall 52 may be substantially flat. The first washer surface 48 comprises a surface roughness such that a friction connection between the washer and the die head can be performed, as schematically illustrated in Fig. 2.

As illustrated in fig. 4, the first and second washer surfaces 48, 50 are flat and each forms continuous areas, without pre-holes or other particular pattern (protrusion or recess). First and second washer surfaces 48, 50 each extend in a plane, the plane of the first washer surface being parallel to the plane of the second washer surface.

For example the thickness of the washer is between 1 to 4 millimeters, or between 2 and 3 millimeters. The diameter of the washer can be between 10 and 30 millimeters, more particularly between 15 and 25 millimeters or around 19 millimeters. The washer 46 may protrudes from the sleeve of 0.3 to 1 millimeters, for example of about 0.5 millimeters. Thus the components to be joined are only in contact with the washer 46 and not with the sleeve 16 (and more particularly with the second end of the sleeve).

For instance the diameter of the washer 46 is equal to or superior to a diameter of the die head 20. Thus the components to be joined are only in contact with the washer and not with the die 12.

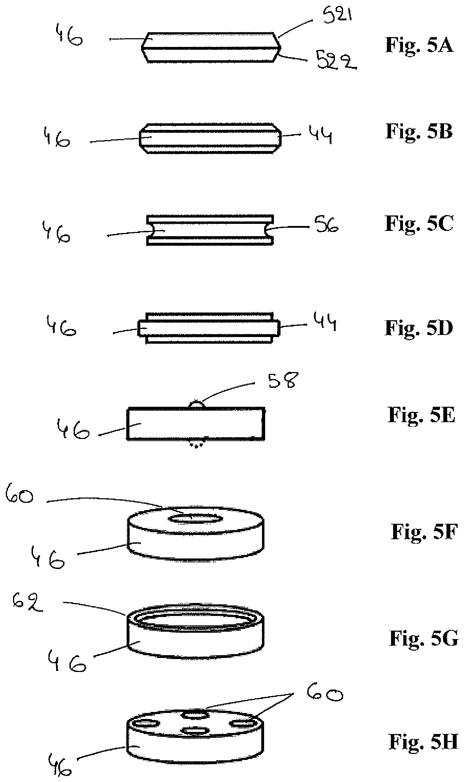

In other embodiments, the washer 46 may have other shapes than a circular-shape or flat surfaces. Fig. 5A to Fig. 5L depict several possible embodiments for the washer 46.

The washer 46 illustrated in Fig. 5A comprises a lateral wall 52 formed by two segments 521, 522 which form a non-zero angle, such that a tapered portion is defined.

The washer 46 illustrated in Fig. 5B and in Fig. 5D comprises a lateral wall 52 with a rim 44. The rim of Fig. 5B is arranged such that the lateral wall still form a continuous surface. The rim 44 of Fig. 5D is arranged such that it forms a surface detachment. In Fig. 5C, a slot 56 is created in the lateral wall. Thus the sleeve may be assembled to the washer with a form fit connection. For example the sleeve comprises on its inner lateral wall a complementary shape, such as a slot (if the washer comprises a rim) or a rim (if the washer comprises a slot). The form fit connection may allow the washer to be securely kept in position.

In Fig. 5E, Fig. 5F and Fig. 5G, the thickness and/or the material and/or the strength of the washer is modified. For example in Fig. 5E, the washer comprises a centering protrusion 58. In Fig. 5F, the washer comprises a blind or through hole 60. In Fig. 5G, the first washer surface and/or the second washer surface comprises an external rim 62. In Fig. 5H, the washer comprises a plurality of blind or through holes 60.

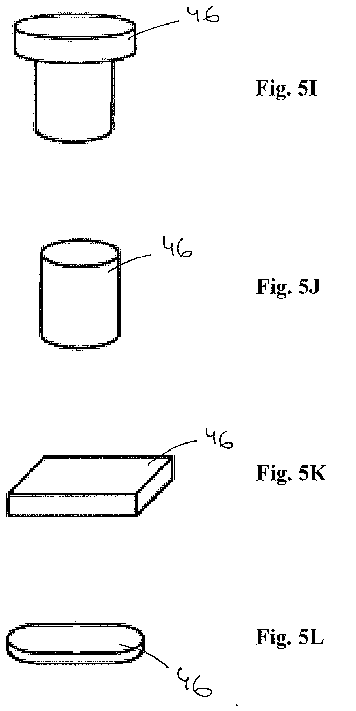

In Fig. 5I, the washer comprises a washer head and a washer shank, such that the global shape of the washer is similar to the shape of a rivet. In Fig. 5J, the washer has a cylindrical shape with a thickness greater than its diameter.

The washer of Fig. 5K has a square shape. In other embodiments, a rectangular or polygonal shape could be implemented. Finally the washer of Fig. 5L has an oblong shape.

The different washer embodiments illustrated in Fig. 5A to Fig. 5L and in Fig. 4 may be implemented and such washer 46 may be inserted in the recess. In some embodiments, the inner shape of the sleeve may be modified to correspond to the shape of the washer used.

More particularly, one or the other embodiment may be used to increase and/or decrease the securing of the washer in the recess and/or the ductility of the washer.

The second end 40 of the sleeve may be slightly tapered (inwardly extending toward the longitudinal axis), in order to center the washer 46, as illustrated in Fig. 3 or Fig. 4. In an embodiment, the tapered portion may cooperate with a portion of the washer to form a form fit connection. For instance, as illustrated in Fig. 2, the tapered portion is used as a centering mean and a friction connection is provided between the washer and the second surface of the die head 20, as previously described.

A portion of the sleeve 16 may be provided with at least one elastic tongues 64. For instance, as illustrated in Fig. 3, several elastic tongues 64 may be provided. The tongues 64 partly form the second end 40 of the sleeve and enable the centering of the washer 46. The second end 40 of the sleeve may further comprise a slot 66 adapted for the transfer of a washer 46 from a feeding track to the recess 44. The washer can be automatically fed in the recess after each joining step. The elastic tongues 64 are separated by a gap 68 from each other or from a basis body 70 of the sleeve. The gap 68 may have an enlarged portion 72 at the base of the tongue (opposite the free end of the tongue forming the second end of the sleeve), in order to reduce material stress.

The sleeve 16 may be provided with a centering element 74 adapted to center a feeding track for feeding the washer 46 in the recess 44, as represented in fig. 3. The centering element 74 may be formed by two cavities 741, 742 adapted to cooperate with a fork of a feeding track (not represented).

The sleeve 16 may be provided with a window 76 allowing access to the locking element 38 of the supporting body 18 to secure the position of the die 12.

For example, the supporting body 18 is made in a first material, more particularly a first steel material. The sleeve is made is a second material, more particularly a second steel material and the first and second steel materials are different. The sleeve 16 may be made in spring steel and any other material having good elastic properties. The supporting body 18 may be made in a hard material, such as a steel with high hardness.

A spring 78 is arranged between the sleeve 16 and the supporting body 18. The spring comprises a first end 80 cooperating with a portion of the supporting body 18 and a second end 82 cooperating with a portion of the sleeve 16. More particularly the spring extends along the longitudinal axis between the first end 80 and the second end 82. The second end 82 cooperates with the first end of the sleeve. The first end 80 cooperates with a shoulder 84 provided on the supporting body or any other abutment portion formed on the supporting body 18 to cooperate with the spring 78. The spring 78 allows the sleeve to longitudinally move along the supporting body, and more particularly along the first portion of the supporting body. Thus, if no washer is provided in the recess during a joining step, the apparatus is not damaged. The spring is adapted to be arranged around a segment of the first portion of the supporting body 18.

The apparatus 14 with the washer 46 form a system 86 for joining at least one first component and one second component. For example, the first and second components are two panels or two sheet parts. The two components can be placed above one another on the second surface of the washer arranged in the recess. The two components can be pressed together via a setting head (not shown).

In the pressed together state of the first and second components and of the washer 46, the first and second components may be pierced by means of an auxiliary joining part, for example a fastener such as a self-piercing rivet. The auxiliary joining part is further driven by the setting head and a lower end of the auxiliary joining part can be introduced into the washer. The setting force applied allows a deviation of a portion of the auxiliary joining part into the washer and the auxiliary joining part is connected to the washer in form-fitted manner. The first and second components are thus secured together. In other words, in order to reliably connect the two components together, a shaft of the auxiliary joining part, completely penetrates through the components to be connected is anchored to the washer.

## Claims

1. System for joining at least one first component and one second component comprising:
a) an apparatus (14) for joining at least the first component and the second component comprising:
- a die (12) with a die shank (22) and a die head (20), wherein the die head comprises a first surface (28) and a second surface (30),
- a supporting body (18) comprising an aperture (32) in which the die shank (22) extends and a receiving surface (34) supporting the first surface (28) of the die head;
- a sleeve (16) extending between a first end (42) and a second end (40), the sleeve being arranged around a portion of the supporting body (18) and around the die head (20), wherein the sleeve extends beyond the die head (20) such that a recess (44) is formed between the second end (40) of the sleeve and the second surface (30) of the die head (20), the recess (44) being adapted to receive a washer (46),
**characterised in that** the system further comprises:
b) a washer (46) having a washer diameter, a first surface (48) and a second surface (50) opposite the first surface (48), wherein the washer (46) extends in the recess (44) provided between the second end (40) of the sleeve and the second surface (30) of the die head (20), and wherein the washer diameter is equal to or superior to a diameter of the die head (20).

2. System (14) according to claim 1 further comprising a spring (78) arranged around the supporting body (18) and cooperating with the first end of the sleeve (16), such that the sleeve (16) is adapted to move longitudinally along the supporting body (18).

3. System (14) according to claim 1 or 2, wherein the second end (40) of the sleeve (16) is at least partly tapered.

4. System (14) according to any of claims 1 to 3, wherein the sleeve (16) comprises at least one elastic tongue partly defining the second end.

5. System (14) according to any of claims 1 to 4, wherein the supporting body (18) comprises a locking opening (38) adapted to secure the die shank in the aperture, and wherein the locking opening is accessible through the sleeve.

6. System (14) according to any of the preceding claims, wherein the supporting body (18) is made in a first steel material, wherein the sleeve is made is a second steel material, and wherein the first and second steel materials are different.

7. System (14) according to claim 6, wherein the second steel material has a higher yield strength than the first steel material.

8. System (14) according to any of the preceding claims, wherein the supporting body (18) and/or the sleeve (16) comprises a centering element (74) adapted to center a feeding track for feeding the washer in the recess.

9. System (14) according to claim 8, wherein the centering element (74) comprises two cavities (741, 742) adapted to cooperate with a fork of a feeding track.

10. System (14) according to any claims 1 to 9, wherein the second end of the sleeve comprises a plurality of projection adapted to center a washer (46).

11. System (14) according to any of claims 1 to 10, wherein the second end (40) of the sleeve comprises a slot adapted for the transfer of a washer from a feeding track to the recess.

12. System according to any of claims 1 to 11, wherein the washer (46) protrudes from the second end of the sleeve.

13. System according to any of claims 1 to 12, wherein the washer has a circular shape and a washer thickness, wherein the first surface (48) of the washer is adapted to be connected to the die head by a friction connection and/or a form fit connection.

14. Method for joining at least one first component and one second component by a self-piercing rivet comprising the steps:
a)
- providing an apparatus (14) for joining at least one first component and one second component comprising:
- a die (12) with a die shank (22) and a die head (20), wherein the die head (20) comprises a first surface (28) and a second surface (30),
- a supporting body (18) comprising an aperture (32) in which the die shank (22) extends and a receiving surface (34) supporting the first surface (28) of the die head (20);
- a sleeve (16) extending between a first end (42) and a second end (40), the sleeve (16) being arranged around a portion of the supporting body (18) and around the die head (20), wherein the sleeve (16) extends beyond the die head (20) such that a recess (44) is formed between the second end (40) of the sleeve (16) and the second surface (30) of the die head (20), the recess (44) being adapted to receive a washer (46);
b)
- providing a washer (46) and inserting the washer in the recess (44) of the apparatus (14),
- arranging a first and a second component over one another and against the washer (46),
- providing and setting a self-piercing rivet such that a shaft of the self-piercing rivet penetrates the first component, the second component and the washer (46), wherein the washer (46) acts as a die.

## Patentansprüche

1. System zum Verbinden zumindest einer ersten Komponente und einer zweiten Komponente, umfassend:
a) eine Einrichtung (14) zum Verbinden zumindest der ersten Komponente und der zweiten Komponente, umfassend:
- eine Matrize (12) mit einem Matrizenschaft (22) und einem Matrizenkopf (20), wobei der Matrizenkopf eine erste Oberfläche (28) und eine zweite Oberfläche (30) umfasst,
- einen Trägerkörper (18), der eine Öffnung (32), in der sich der Matrizenschaft (22) erstreckt, und eine Aufnahmefläche (34), die die erste Oberfläche (28) des Matrizenkopfs trägt, umfasst;
- eine Hülse (16), die sich zwischen einem ersten Ende (42) und einem zweiten Ende (40) erstreckt, wobei die Hülse um einen Abschnitt des Trägerkörpers (18) und um den Matrizenkopf (20) angeordnet ist, wobei sich die Hülse über den Matrizenkopf (20) hinaus erstreckt, sodass eine Aussparung (44) zwischen dem zweiten Ende (40) der Hülse und der zweiten Oberfläche (30) des Matrizenkopfs (20) gebildet wird, wobei die Aussparung (44) angepasst ist, eine Unterlegscheibe (46) aufzunehmen,
**dadurch gekennzeichnet, dass** das System weiter umfasst:
b) eine Unterlegscheibe (46) mit einem Unterlegscheibendurchmesser, einer ersten Oberfläche (48) und einer zweiten Oberfläche (50) gegenüber der ersten Oberfläche (48), wobei sich die Unterlegscheibe (46) in der Aussparung (44) erstreckt, die zwischen dem zweiten Ende (40) der Hülse und der zweiten Oberfläche (30) des Matrizenkopfs (20) bereitgestellt ist, und wobei der Unterlegscheibendurchmesser gleich oder größer als ein Durchmesser des Matrizenkopfs (20) ist.

2. System (14) nach Anspruch 1, weiter umfassend eine Feder (78), die um den Trägerkörper (18) angeordnet ist und mit dem ersten Ende der Hülse (16) zusammenwirkt, sodass die Hülse (16) angepasst ist, sich in Längsrichtung entlang des Trägerkörpers (18) zu bewegen.

3. System (14) nach Anspruch 1 oder 2, wobei das zweite Ende (40) der Hülse (16) mindestens teilweise konisch ist.

4. System (14) nach einem der Ansprüche 1 bis 3, wobei die Hülse (16) zumindest eine elastische Zunge umfasst, die teilweise das zweite Ende definiert.

5. System (14) nach einem der Ansprüche 1 bis 4, wobei der Trägerkörper (18) eine Verriegelungsöffnung (38) umfasst, die angepasst ist, den Matrizenschaft in der Öffnung zu sichern, und wobei die Verriegelungsöffnung durch die Hülse zugänglich ist.

6. System (14) nach einem der vorstehenden Ansprüche, wobei der Trägerkörper (18) aus einem ersten Stahlmaterial hergestellt ist, wobei die Hülse aus einem zweiten Stahlmaterial hergestellt ist und wobei sich das erste und zweite Stahlmaterial unterscheiden.

7. System (14) nach Anspruch 6, wobei das zweite Stahlmaterial eine höhere Streckfestigkeit als das erste Stahlmaterial aufweist.

8. System (14) nach einem der vorstehenden Ansprüche, wobei der Trägerkörper (18) und/oder die Hülse (16) ein Zentrierelement (74) umfassen, das ausgebildet ist, eine Zufuhrbahn zum Zuführen der Unterlegscheibe in der Aussparung zu zentrieren.

9. System (14) nach Anspruch 8, wobei das Zentrierelement (74) zwei Hohlräume (741, 742) umfasst, die angepasst sind, mit einer Gabel einer Zufuhrbahn zusammenzuwirken.

10. System (14) nach einem der Ansprüche 1 bis 9, wobei das zweite Ende der Hülse eine Vielzahl von Fortsätzen umfasst, die ausgebildet sind, eine Unterlegscheibe (46) zu zentrieren.

11. System (14) nach einem der Ansprüche 1 bis 10, wobei das zweite Ende (40) der Hülse einen Schlitz umfasst, der für die Überführung einer Unterlegscheibe von einer Zufuhrbahn zu der Aussparung angepasst ist.

12. System nach einem der Ansprüche 1 bis 11, wobei die Unterlegscheibe (46) von dem zweiten Ende der Hülse vorragt.

13. System nach einem der Ansprüche 1 bis 12, wobei die Unterlegscheibe eine kreisförmige Form und eine Unterlegscheibendicke aufweist, wobei die erste Oberfläche (48) der Unterlegscheibe ausgebildet ist, mit dem Matrizenkopf durch eine Reibverbindung und/oder eine formschlüssige Verbindung verbunden zu sein.

14. Verfahren zum Verbinden zumindest einer ersten Komponente und einer zweiten Komponente durch eine selbstdurchbohrende Niete, umfassend die Schritte:
a)
- Bereitstellen einer Einrichtung (14) zum Verbinden zumindest einer ersten Komponente und einer zweiten Komponente, umfassend:
- eine Matrize (12) mit einem Matrizenschaft (22) und einem Matrizenkopf (20), wobei der Matrizenkopf (20) eine erste Oberfläche (28) und eine zweite Oberfläche (30) umfasst,
- einen Trägerkörper (18), der eine Öffnung (32), in der sich der Matrizenschaft (22) erstreckt, und eine Aufnahmefläche (34), die die erste Oberfläche (28) des Matrizenkopfs (20) trägt, umfasst;
- eine Hülse (16), die sich zwischen einem ersten Ende (42) und einem zweiten Ende (40) erstreckt, wobei die Hülse (16) um einen Abschnitt des Trägerkörpers (18) und um den Matrizenkopf (20) angeordnet ist, wobei sich die Hülse (16) über den Matrizenkopf (20) hinaus erstreckt, sodass eine Aussparung (44) zwischen dem zweiten Ende (40) der Hülse (16) und der zweiten Oberfläche (30) des Matrizenkopfs (20) gebildet wird, wobei die Aussparung (44) angepasst ist, eine Unterlegscheibe (46) aufzunehmen;
b)
- Bereitstellen einer Unterlegscheibe (46) und Einsetzen der Unterlegscheibe in die Aussparung (44) der Einrichtung (14),
- Anordnen einer ersten und einer zweiten Komponente übereinander und gegen die Unterlegscheibe (46),
- Bereitstellen und Einrichten eines selbstdurchbohrenden Niets, sodass ein Schaft des selbstdurchbohrenden Niets die erste Komponente, die zweite Komponente und die Unterlegscheibe (46) durchdringt, wobei die Unterlegscheibe (46) als eine Matrize dient.

## Revendications

1. Système pour assembler au moins un premier composant et un second composant comprenant :
a) un appareil (14) pour assembler au moins le premier composant et le second composant comprenant :
- une matrice (12) pourvue d'une tige de matrice (22) et d'une tête de matrice (20), dans lequel la tête de matrice comprend une première surface (28) et une seconde surface (30),
- un corps de support (18) comprenant une ouverture (32) dans laquelle s'étend la tige de matrice (22) et une surface de réception (34) supportant la première surface (28) de la tête de matrice ;
- un manchon (16) s'étendant entre une première extrémité (42) et une seconde extrémité (40), le manchon étant agencé autour d'une portion du corps de support (18) et autour de la tête de matrice (20), dans lequel le manchon s'étend au-delà de la tête de matrice (20) de telle sorte qu'un évidement (44) est formé entre la seconde extrémité (40) du manchon et la seconde surface (30) de la tête de matrice (20), l'évidement (44) étant adapté pour recevoir une rondelle (46),
**caractérisé en ce que** le système comprend en outre :
b) une rondelle (46) présentant un diamètre de rondelle, une première surface (48) et une seconde surface (50) opposée à la première surface (48),
dans lequel la rondelle (46) s'étend dans l'évidement (44) situé entre la seconde extrémité (40) du manchon et la seconde surface (30) de la tête de matrice (20), et
dans lequel le diamètre de rondelle est égal ou supérieur à un diamètre de la tête de matrice (20).

2. Système (14) selon la revendication 1 comprenant en outre un ressort (78) agencé autour du corps de support (18) et coopérant avec la première extrémité du manchon (16), de telle sorte que le manchon (16) est adapté pour se déplacer longitudinalement le long du corps de support (18).

3. Système (14) selon la revendication 1 ou 2, dans lequel la seconde extrémité (40) du manchon (16) est au moins partiellement effilée.

4. Système (14) selon l'une quelconque des revendications 1 à 3, dans lequel le manchon (16) comprend au moins une languette élastique définissant en partie la seconde extrémité.

5. Système (14) selon l'une quelconque des revendications 1 à 4, dans lequel le corps de support (18) comprend une ouverture de verrouillage (38) adaptée pour fixer la tige de matrice dans l'ouverture, et dans lequel l'ouverture de verrouillage est accessible à travers le manchon.

6. Système (14) selon l'une quelconque des revendications précédentes, dans lequel le corps de support (18) est fabriqué en un premier matériau d'acier, dans lequel le manchon est fabriqué en un second matériau d'acier, et dans lequel les premier et second matériaux d'acier sont différents.

7. Système (14) selon la revendication 6, dans lequel le second matériau d'acier présente une limite d'élasticité plus élevée que celle du premier matériau d'acier.

8. Système (14) selon l'une quelconque des revendications précédentes, dans lequel le corps de support (18) et/ou le manchon (16) comprend/comprennent un élément de centrage (74) adapté pour centrer une voie d'acheminement pour acheminer la rondelle dans l'évidement.

9. Système (14) selon la revendication 8, dans lequel l'élément de centrage (74) comprend deux cavités (741, 742) adaptées pour coopérer avec une fourche d'une voie d'acheminement.

10. Système (14) selon l'une quelconque des revendications 1 à 9, dans lequel la seconde extrémité du manchon comprend une pluralité de saillies adaptées pour center une rondelle (46).

11. Système (14) selon l'une quelconque des revendications 1 à 10, dans lequel la seconde extrémité (40) du manchon comprend une fente adaptée pour le transfert d'une rondelle depuis une voie d'acheminement vers l'évidement.

12. Système selon l'une quelconque des revendications 1 à 11, dans lequel la rondelle (46) fait saillie depuis la seconde extrémité du manchon.

13. Système selon l'une quelconque des revendications 1 à 12, dans lequel la rondelle présente une forme circulaire et une épaisseur de rondelle, dans lequel la première surface (48) de la rondelle est adaptée pour être reliée à la tête de matrice par une liaison par friction et/ou une liaison par ajustement de forme.

14. Procédé pour assembler au moins un premier composant et un second composant par un rivet d'auto-perçage comprenant les étapes de :
a)
- fourniture d'un appareil (144) pour assembler au moins un premier composant et un second composant comprenant :
- une matrice (12) pourvue d'une tige de matrice (22) et d'une tête de matrice (20), dans lequel la tête de matrice (20) comprend une première surface (28) et une seconde surface (30),
- un corps de support (18) comprenant une ouverture (32) dans laquelle s'étend la tige de matrice (22) et une surface de réception (34) supportant la première surface (28) de la tête de matrice (20) ;
- un manchon (16) s'étendant entre une première extrémité (42) et une seconde extrémité (40), le manchon (16) étant agencé autour d'une portion du corps de support (18) et autour de la tête de matrice (20), dans lequel le manchon (16) s'étend au-delà de la tête de matrice (20) de telle sorte qu'un évidement (44) est formé entre la seconde extrémité (40) du manchon (16) et la seconde surface (30) de la tête de matrice (20), l'évidement (44) étant adapté pour recevoir une rondelle (46) ;
b)
- fourniture d'une rondelle (46) et insertion de la rondelle dans l'évidement (44) de l'appareil (14),
- agencement d'un premier et d'un second composants l'un par-dessus l'autre et contre la rondelle (46),
- fourniture et réglage d'un rivet d'auto-perçage de telle sorte qu'un arbre du rivet d'auto-perçage pénètre dans le premier composant, le second composant et la rondelle (46), dans lequel la rondelle (46) sert de matrice.
